# EUROPÄISCHE PATENTANMELDUNG

(11) **EP 4 079 810 A1**
(43) Veröffentlichungstag der Anmeldung: **26.10.2022**
(21) Anmeldenummer: 21169389.0
(22) Anmeldetag: 20.04.2021
(51) Int. Cl.: C08L 75/04, C08K 5/29, C08K 5/42

(54) **HYDROLYSESTABILE THERMOPLASTISCHE POLYURETHANE, VERFAHREN ZUR HERSTELLUNG UND DEREN VERWENDUNG**

(71) Anmelder: LANXESS Deutschland GmbH, 50569 Köln (DE)
(72) Erfinder: LAUFER, Wilhelm, 67158 Ellerstadt (DE); Facklam, Thomas, 51375 Leverkusen (DE)

(57) **Zusammenfassung**

Die vorliegende Erfindung betrifft Zusammensetzungen, enthaltend:
(a) mindestens ein Carbodiimid
(b) Sulfonsäureester und
(c) thermoplastisches Polyurethan
sowie ein Verfahren zu deren Herstellung und deren Anwendung.

## Beschreibung

Die vorliegende Erfindung betrifft das technische Gebiet von thermoplastischem Polyurethan, dessen Herstellung und dessen Anwendungen.

Thermoplastische Polyurethan-Elastomere, im Folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten lasst sich eine große Variationsbreite mechanischer Eigenschaften erzielen.

Eine Übersicht über TPU, ihre Eigenschaften, Herstellung und Anwendungen wird z. B. in Hans-Georg Wussow: "Thermoplastic Elastomers", Ullmann's Encyclopedia of Industrial Chemistry, Electronic Release, 7th ed., chap. 2 "Thermoplastic Polyurethane Elastomers", Wiley-VCH, Weinheim 2004 gegeben.

TPU können kontinuierlich oder diskontinuierlich nach verschiedenen Verfahren hergestellt werden. Als die bekanntesten werden das sogenannte Bandverfahren, zum Beispiel nach GB 1 057 018 A, und das Extruderverfahren, zum Beispiel nach US 3,642,964, auch technisch genutzt.

TPU sind typischerweise aus linearen Polyhydroxyverbindungen, aromatischen Diisocyanaten und Diolen aufgebaut.

Ihre Härte wird über den Gehalt an sogenannter Hartphase, die im Wesentlichen aus Diisocyanat-Diol-Segmenten besteht, eingestellt. Durch eine geeignete Wahl der Molverhältnisse der Aufbaukomponenten können TPU mit Härten von Shore A 85 bis Shore D 74 problemlos hergestellt werden. TPU mit einer Shore A-Härte kleiner als 85 können theoretisch zwar auf die gleiche Weise erhalten werden; nachteilig ist jedoch, dass sich die Produkte bei der Herstellung nur schwierig handhaben lassen, da sie äußerst schwer erstarren und fest werden.

In vielen Anwendungen werden den thermoplastischen Polyurethanen Weichmacher zugesetzt, um die Eigenschaften der Formkörper zu verbessern. Die meisten diese Weichmacher sind esterbasiert und verschlechtern jedoch auf der anderen Seite die Hydrolysebeständigkeit des Polymers.

Aus EP 3099725 B1 ist bekannt, dass dieser negative Effekt durch die Zugabe eines Carbodiimids zu den Ester-basierten Weichmachern ausgewählt aus der Gruppe bestehend aus Zitronensäureestern, Acetylzitronensäureestern, Phthalsäureestern, Benzoesäureestern, Adipinsäureestern, hydrierten Phthalsäureestern und Phosphorsäureestern großteils wieder wettgemacht werden kann.

Allgemein haben sich Carbodiimide als effektive Hydrolyseschutzmittel für thermoplastische Kunststoffe, darunter auch für thermoplastische esterbasierte Polyurethane bereits bewährt. Die Carbodiimide haben allerdings den Nachteil sehr teuer zu sein und sich bei höheren Temperaturen während der Verarbeitung zu zersetzen bzw. giftige Gase zu entwickeln (Emission von Isocyanaten). Somit bestand Bedarf an Zusammensetzungen mit verbesserter Hydolysebeständigkeit, welche es ermöglichen, unter Beibehaltung der Hydrolysebeständigkeit des Polymers die eingesetzte Menge an Carbodiimiden zu reduzieren.

Eine Aufgabe der vorliegenden Erfindung bestand somit darin, thermoplastische Polyurethanzusammensetzungen bereitzustellen, die eine verbesserte Hydrolysebeständigkeit aufweisen und/oder bei gleichbleibender Hydrolysestabilität eine Verringerung der eingesetzten Menge an Carbodiimid erlauben.

Überraschenderweise wurde nun gefunden, dass diese Aufgabe erfüllt wird durchZusammensetzungen, enthaltend die Komponenten:
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden,
(b) Sulfonsäureester von C₂-C₂₀-Alkyl mono- oder disulfonsäuren mit unsubstituiertem oder C₁- bis C₄-Alkyl und/oder Halogen substituiertem Phenol, und
(c) thermoplastisches Polyurethan.

Bevorzugt verwendet werden als Komponente (a) Carbodiimide der Formel (I)

R²-R¹-(-N=C=N-R¹-)ₙ-R² (I),

wobei
- n: einer ganzen Zahl von 1 bis 500, bevorzugt 2 bis 100, weiter bevorzugt 3 bis 20, ganz besonders bevorzugt 4 bis 10 entspricht,
- R¹: für C₁-C₂₄-Alkylene, C₅-C₁₂-Cycloalkylene, C₁-C₁₂-Alkyl-substituierte oder C₁-C₂₄-Oxyalkyl-substituierte C₆-C₁₂-Cycloalkylene, C₇-C₂₄-Aryl-Alkylene, C₁-C₁₂-Alkyl-substituierte C₆-C₁₀-Arylene, C₇-C₁₈-Alkylaryl-substituierte C₆-C₁₀-Arylene, sowie gegebenenfalls C₁-C₁₂-Alkyl-substituierte über Alkylengruppen verbrückte C₆-C₁₀-Arylene, die in Summe 8 bis 30 Kohlenstoffatome aufweisen und/oder C₆-C₁₀-Arylene steht,
- R²: -H, -NCO, -NHCONHR³, -NHCONR³R⁴ oder -NHCOOR⁵ ist und wobei R³ und R⁴ gleich oder verschieden sind und einen C₁-C₁₂-Alkyl-, C₆-C₁₂-Cycloalkyl, C₇-C₁₈-Aralkyl- oder Arylrest darstellen, und
- R⁵: einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder einem Alkoxypolyoxyalkylenrest, bevorzugt einem methoxylierten Polyethylenglykolrest der Formel: -(CH₂CH₂O)ₘ-OCH₃ mit m = 1 bis 20 entspricht.

Besonders bevorzugt verwendbar als Komponente (a) sind Carbodiimide, bei denen
- R¹: für C₁-C₁₂-Alkyl-substituierte C₆-C₁₀-Arylene, C₇-C₁₈-Alkylaryl-substituierte C₆-C₁₀-Arylene, sowie gegebenenfalls C₁-C₁₂-Alkyl-substituierte über Alkylengruppen verbrückte C₆-C₁₀-Arylene, die in Summe 8 bis 30 Kohlenstoffatome aufweisen und/oder C₆-C₁₀-Arylene steht und
- R²: für H oder -NHCOOR⁵ steht.

Weiter bevorzugt als Komponente (a) sind Carbodiimide, bei denen
- R¹: für C₁-C₆-Alkyl-substituierte C₆-C₁₀-Arylene und/oder C₆-C₁₀-Arylene,
- R²: für NHCOOR⁵ und R⁵ für einen methoxylierten Polyethylenglykolrest der Formel:-(CH₂CH₂O)ₘ-OCH₃ mit m = 1 bis 20 steht.

Die gegebenenfalls C₁-C₁₂-Alkyl-substituierten über Alkylengruppen verbrückten C₆-C₁₀-Arylene, die in Summe 8 bis 30 Kohlenstoffatome aufweisen, besitzen die allgemeine Struktur -Alkylen-Arylen-Alkylen-, wobei die Alkylengruppen linear oder verzweigt sein können und die Arylengruppe bis zu vier C₁-C₁₂-Alkylsubstituenten aufweisen kann, unter der Voraussetzung, dass die Gesamtzahl der Kohlenstoffatome nicht mehr als 30 beträgt. Bevorzugt sind dabei über Alkylengruppen verbrückten C₆-C₁₀-Arylene, die an der Arylengruppe keine Alkylgruppen aufweisen und bei denen die beiden Alkylengruppen jeweils 1 bis 6 Kohlenstoffatome aufweisen.

Meist bevorzugt als Komponente (a) sind Carbodiimide, bei denen R¹ für -C(CH₃)₂-C₆H₄-C(CH₃)₂- und R⁵ für einen methoxylierten Polyethylenglykolrest der Formel: -(CH₂CH₂O)ₘ-OCH₃ mit m = 1 bis 20 steht.

Bevorzugt werden als Komponente (b) Sulfonsäureester von C₁₂-C₁₈-Alkyl mono- oder disulfonsäuren mit unsubstituiertem oder C₁- bis C₄-Alkyl und/oder Halogen substituiertem Phenol eingesetzt.

Besonders bevorzugt werden als Komponente (b) Sulfonsäureester von C₁₂-C₁₈-Alkyl mono- oder disulfonsäuren mit unsubstituiertem oder C₁- bis C₄-Alkyl oder Halogen substituiertem Phenol eingesetzt.

Meist bevorzugt werden als Komponente (b) Sulfonsäureester von C₁₄-C₁₇-Alkyl mono- oder disulfonsäuren mit Phenol eingesetzt.

Bevorzugt beträgt das Gewichtsverhältnis von Komponente (a) zu Komponente (b) in den erfindungsgemäßen Zusammensetzungen von 30:70 bis 70:30, besonders bevorzugt von 40:60 bis 60:40 und meist bevorzugt 50:50.

Bevorzugt beträgt das Gewichtsverhältnis von Komponente (a) zu thermoplastischem Polyurethan in den erfindungsgemäßen Zusammensetzungen von 2:1000 bis 25:1000, besonders bevorzugt von 5:1000 bis 10:1000 und meist bevorzugt 7:1000 bis 8:1000.

Bevorzugt beträgt der NCN-Gehalt (Carbodiimidgruppengehalt) in den erfindungsgemäßen Zusammensetzungen 1 - 10 Gew.-%, bevorzugt 2 - 8 Gew.-%, besonders bevorzugt 3 - 7 Gew.-%, bezogen auf die Gesamtmenge von Carbodiimid und Alkylsulfonsäureester.

Gegenstand der vorliegenden Erfindung ist weiterhin ein Verfahren zur Herstellung einer thermoplastischen Polyurethanzusammensetzung, wobei Komponente (a) und Komponente (b) einem Reaktionsgemisch zur Herstellung von thermoplastischem Polyurethan zugegeben, und anschließend das thermoplastische Polyurethan durch Polymerisation des Reaktionsgemischs gebildet wird.

In einer bevorzugten Ausführungsform werden Komponente (a) und Komponente (b) zuerst gemischt und danach die Mischung dem Reaktionsgemisch zur Herstellung von thermoplastischem Polyurethan zugegeben.

Sofern die Zusammensetzung einem Reaktionsgemisch zugegeben wird, kann dies prinzipiell in jedem Stadium des Herstellungsverfahrens eines thermoplastischen Polyurethans erfolgen.

In einer alternativen Ausführungsform wird Komponente (a) und Komponente (b) mit einem thermoplastischen Polyurethan vermengt.

Sofern die Mischung aus Komponenten (a) und (b) zu einem bereits im Wesentlichen ausreagierten thermoplastischen Polyurethan zugegeben wird, kann dies beispielsweise durch Eincompoundieren oder Einquellen erfolgen.

Ein weiterer Gegenstand der Erfindung sind Formkörper, insbesondere in Form von Rollen, Förderbändern oder Membranen, welche die erfindungsgemäße Zusammensetzung enthalten.

Der Rahmen der Erfindung erfasst alle oben oder nachfolgend angeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

**Carbodiimid (CDI):** Polycarbodiimid der Formel (I) mit R¹ = m-Tetramethylxylen, R² = NHCOOR⁵, R⁵ = -(C₂H₅O)ₘ-OCH₃, mit n = ca. 4-5, m = ca. 11 und einem NCN-Gehalt von ca. 7 Gew.%. Zur Bestimmung des NCN-Gehaltes wurden die NCN-Gruppen mit im Überschuss zugegebener Oxalsäure reagiert und dann die nicht reagierte Oxalsäure mit Natriummethylat potentiometrisch rücktitriert, wobei der Blindwert des Systems berücksichtigt wurde.
**Ester (I):** Alkylsulfonsäureester enthaltend sekundäre C₁₄-C₁₇ Alkyl-Mono bzw. Disulfonsäureester mit Phenol (Mesamoll^{®} der Lanxess Deutschland GmbH)
**Ester (II):** Tri-n-Butylcitrat (Uniplex 83 der Lanxess Deutschland GmbH) **Thermoplastisches Polyurethan (TPU):** Desmopan^{®} 2587 A der Covestro AG

### Hydrolyseschutz in thermoplastisches Polyurethan (TPU)

Zur Bewertung der Hydrolyseschutzwirkung in TPU wurden das Polycarbodiimid oder die Zusammensetzungen aus Ester und Polycarbodiimid (mit einem Gewichtsverhältnis Ester zu Polycarbodiimid von 1:1) mittels eines Labordoppelschneckenextruders ZSK 25 der Firma Werner & Pfleiderer vor der unten beschriebenen Messung in TPU eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasser bei einer Temperatur von 90°C gelagert und deren Reißfestigkeit in MPa gemessen. Die Ergebnisse sind in Tabelle 1 dargestellt:

**Tabelle 1: Hydrolysetest**

| | Bsp. 1 (Vergleich) 0,75 Gew.% CDI | Bsp. 2 (Vergleich) 1,0 Gew. % CDI | Bsp. 3 (erf.) je 0.75 Gew.% Ester (I) + CDI | Bsp. 4 (Vergleich) je 0.75 Gew.% Ester (II) + CDI |
|---|---|---|---|---|
| Stabilitätsdauer bis zu einer relativen Reißfestigkeit von 50 % des Anfangswertes | 49 Tage | 54 Tage | 55 Tage | 49 Tage |

Die Ergebnisse in der Tabelle 1 zeigen, dass die erfindungsgemäße Zusammensetzung eine Reduzierung des Carbodiimid-Anteils im TPU von min. 25 % ermöglicht. Die aus dem Stand der Technik bekannten Ester zeigen hier keine Verbesserung.

## Patentansprüche

1. Zusammensetzungen, enthaltend:
(a) mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden,
(b) Sulfonsäureester von C₂-C₂₀-Alkyl mono- oder disulfonsäuren mit unsubstituiertem oder C₁- bis C₄-Alkyl und/oder Halogen substituiertem Phenol und
c) thermoplastisches Polyurethan.

2. Zusammensetzungen gemäß Anspruch 1, wobei das Carbodiimid ausgewählt ist aus Carbodiimiden der Formel (I)
R²-R¹-(-N=C=N-R¹-)ₙ-R² (I),
wobei
n einer ganzen Zahl von 1 bis 500, bevorzugt 2 bis 100, weiter bevorzugt 3 bis 20, ganz besonders bevorzugt 4 bis 10 entspricht,
R¹ für C₁-C₂₄-Alkylene, C₅-C₁₂-Cycloalkylene, C₁-C₁₂-Alkyl-substituierte oder C₁-C₂₄-Oxyalkyl-substituierte C₆-C₁₂-Cycloalkylene, C₇-C₂₄-Aryl-Alkylene, C₁-C₁₂-Alkyl-substituierte C₆-C₁₀-Arylene, C₇-C₁₈-Alkylaryl-substituierte C₆-C₁₀-Arylene, sowie gegebenenfalls C₁-C₁₂-Alkyl-substituierte über Alkylengruppen verbrückte C₆-C₁₀-Arylene, die in Summe 8 bis 30 Kohlenstoffatome aufweisen und/oder C₆-C₁₀-Arylene steht,
R² -H, -NCO, -NHCONHR³, -NHCONR³R⁴ oder -NHCOOR⁵ ist,
wobei
R³ und R⁴ gleich oder verschieden sind und einen C₁-C₁₂-Alkyl-, C₆-C₁₂-Cycloalkyl, C₇-C₁₈-Aralkyl- oder Arylrest darstellen, und
R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder einem Alkoxypolyoxyalkylenrest, bevorzugt einem methoxylierten Polyethylenglykolrest der Formel: -(CH₂CH₂O)ₘ-OCH₃ mit m = 1 bis 20 entspricht.

3. Zusammensetzungen gemäß Anspruch 1 oder zwei, wobei das Gewichtsverhältnis von Komponente (a) zu Komponente (b) von 30:70 bis 70:30, bevorzugt von 40:60 bis 60:40, besonders bevorzugt 50:50 beträgt.

4. Zusammensetzungen gemäß einem oder mehreren der Ansprüche 1 bis 3, wobei das Gewichtsverhältnis von Komponente (a) zu thermoplastischem Polyurethan von 2:1000 bis 25:1000, bevorzugt von 5:1000 bis 10:1000 und besonders bevorzugt 7:1000 bis 8:1000 beträgt.

5. Zusammensetzungen gemäß einem oder mehreren der Ansprüche 1 bis 4, wobei als Komponente (b) Sulfonsäureester von C₁₂-C₁₈-Alkyl mono- oder disulfonsäuren mit unsubstituiertem oder C₁- bis C₄-Alkyl und/oder Halogen substituiertem Phenol, bevorzugt Sulfonsäureester von C₁₂-C₁₈-Alkyl mono- oder disulfonsäuren mit unsubstituiertem oder C₁- bis C₄-Alkyl oder Halogen substituiertem Phenol und meist bevorzugt Sulfonsäureester von C₁₄-C₁₇-Alkyl mono- oder disulfonsäuren mit Phenol eingesetzt werden.

6. Zusammensetzungen gemäß einem oder mehreren der Ansprüche 2 bis 5, wobei
R¹ für C₁-C₁₂-Alkyl-substituierte C₆-C₁₀-Arylene, C₇-C₁₈-Alkylaryl-substituierte C₆-C₁₀-Arylene, sowie gegebenenfalls C₁-C₁₂-Alkyl-substituierte über Alkylengruppen verbrückte C₆-C₁₀-Arylene, die in Summe 8 bis 30 Kohlenstoffatome aufweisen und/oder C₆-C₁₀-Arylene steht und
R² für H oder -NHCOOR₅ steht.

7. Zusammensetzungen gemäß einem oder mehreren der Ansprüche 2 bis 6, wobei
R¹ für C₁-C₆-Alkyl-substituierte C₆-C₁₀-Arylene und/oder C₆-C₁₀-Arylene,
R² für NHCOOR₅
R⁵ für einen methoxylierten Polyethylenglykolrest der Formel: -(CH₂CH₂O)ₘ-OCH₃ mit m = 1 bis 20 steht.

8. Zusammensetzungen gemäß einem oder mehreren der Ansprüche 2 bis 7, wobei R¹ für -C(CH₃)₂-C₆H₄-C(CH₃)₂- und R⁵ für einen methoxylierten Polyethylenglykolrest der Formel: -(CH₂CH₂O)ₘ-OCH₃ mit m = 1 bis 20 steht.

9. Verfahren zur Herstellung einer Zusammensetzung gemäß einem oder mehreren der Ansprüche 1 bis 8, wobei Komponente (a) und Komponente (b) einem Reaktionsgemisch zur Herstellung von thermoplastischem Polyurethan zugegeben, und anschließend das thermoplastische Polyurethan durch Polymerisation des Reaktionsgemischs gebildet wird.

10. Verfahren zur Herstellung einer Zusammensetzung gemäß Anspruch 9 wobei Komponente (a) und Komponente (b) zuerst gemischt und danach die Mischung dem Reaktionsgemisch zur Herstellung von thermoplastischem Polyurethan zugegeben wird.

11. Verfahren zur Herstellung einer Zusammensetzung gemäß einem oder mehreren der Ansprüche 1 bis 8, wobei Komponente (a) und Komponente (b) mit einem thermoplastischen Polyurethan vermengt wird.

12. Verfahren zur Herstellung einer Zusammensetzung gemäß einem oder mehreren der Anspruch 11, wobei das Vermengen mittels Eincompoundieren oder Einquellen erfolgt.

13. Formkörper enthaltend eine Zusammensetzung gemäß einem oder mehreren der Ansprüche 1 bis 8.

14. Formkörper gemäß Anspruch 13, in Form von Rollen, Förderbändern oder Membranen.
